(19) Europäisches Patentamt / European Patent Office / Office européen des brevets

(11) **EP 4 146 872 B1**

(12) **EUROPEAN PATENT SPECIFICATION**

(45) Date of publication and mention
of the grant of the patent:
**08.05.2024 Bulletin 2024/19**

(21) Application number: **21723256.0**

(22) Date of filing: **05.05.2021**

(51) International Patent Classification (IPC):
*E03F 1/00* (2006.01)     *E03F 3/06* (2006.01)
*E03F 5/10* (2006.01)     *C02F 1/00* (2023.01)
*C02F 103/00* (2006.01)     *G06F 113/14* (2020.01)

(52) Cooperative Patent Classification (CPC):
**E03F 1/00; C02F 1/008; E03F 3/06; E03F 5/10;
E03F 5/102; E03F 5/105; E03F 5/107;**
C02F 2103/001; C02F 2209/001; C02F 2209/006;
C02F 2209/02; C02F 2209/40; C02F 2209/42;
E03F 2201/30; G06F 30/18;       (Cont.)

(86) International application number:
**PCT/EP2021/061776**

(87) International publication number:
**WO 2021/224292 (11.11.2021 Gazette 2021/45)**

(54) **METHOD FOR OPERATING A SEWER NETWORK SYSTEM**

VERFAHREN ZUM BETREIBEN EINES KANALISATIONSNETZSYSTEMS

PROCÉDÉ DE FONCTIONNEMENT D'UN SYSTÈME DE RÉSEAU D'ÉGOUTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.05.2020 LU 101786**

(43) Date of publication of application:
**15.03.2023 Bulletin 2023/11**

(73) Proprietor: **RTC4Water S.a.r.l.
3394 Roeser (LU)**

(72) Inventors:
• **CORNELISSEN, Alex
5554 Remich (LU)**
• **SCHUTZ, Georges
1247 Luxembourg (LU)**

(74) Representative: **Office Freylinger**
**P.O. Box 48**
**8001 Strassen (LU)**

(56) References cited:
**EP-A1- 3 173 880      WO-A1-2004/038343
US-A1- 2006 108 294**

• **MENG FANLIN ET AL: "Water quality permitting:
From end-of-pipe to operational strategies",
WATER RESEARCH, ELSEVIER, AMSTERDAM,
NL, vol. 101, 27 May 2016 (2016-05-27), pages
114-126, XP029651061, ISSN: 0043-1354, DOI:
10.1016/J.WATRES.2016.05.078**

     **(Cont. next page)**

(52) Cooperative Patent Classification (CPC): (Cont.)
G06F 2113/14; Y02A 10/30

**Description**

FIELD OF THE INVENTION

The present invention relates generally to the operation of sewer systems, and more specifically to a method and system to control the flow through sewer systems.

BACKGROUND OF THE INVENTION

Combined Sewer Overflows (CSO's) are structures in a combined sewer system that allow the overflow of sewage to surface waters (lakes, streams, seas) during rain events. Many CSO's have basins or tanks or more generally some form of temporary storage for wastewater. These structures are located before a Waste Water Treatment Plant (WWTP) and should, during rain events, provide a buffer for sewage so that it can be conveyed to a WWTP at a later time. WWTPs can only take a given (maximum) volume of sewage per hour and this restricts the performance of the sewer system. As used herein, the term 'CSO unit' means a combined sewer overflow structure with wastewater storage capacity.

Regrettably, today many Combined Sewer Overflow (CSO) units around the world are passive; i.e. they are not monitored or controlled. The CSO units have fixed, so called "throttled" outflows, which is often achieved using a fixed weir, but also a manually adjustable gate valve or on/off pump. Nevertheless, most CSO units, albeit passive, are already efficient at capturing the so-called "first flush"; this is the heavily polluted wastewater that is produced when a large amount of rainwater first enters the sewage system in their storage. This water volume flushes out the deposits that have been building up in the system since the last rainfall.

More modern CSO units are increasingly having the capability, using ultrasound or pressure sensors, to monitor the level of sewage in one or more basins. Some CSO basins are, in addition, equipped with overflow sensors (water sensing devices, mostly conductivity based), and some monitor the overflow volume (the amount of raw sewage spilled to a stream, lake or sea due to over-capacity caused by the rain event) by various means.

State of the art CSO units can do all off the above as well as controlling the volume conveyed towards the WWTP using a throttling valve or a pump, often being referred to as "actuators", and a flow sensor.

Known sewer network systems and their management are disclosed in EP 3 173 880, WO 2004/038343, US 2006/108,294 and MENG FANLIN ET AL, "Water quality permitting: From end-of-pipe to operational strategies", WATER RESEARCH, ELSEVIER, AMSTERDAM, NL, (20160527), vol. 101, doi:10.1016/J.WATRES.2016.05.078, ISSN 0043-1354, pages 114 - 126, XP029651061.

OBJECT OF THE INVENTION

The object of the present invention is to improve the control of wastewater flows through sewer systems, in particular to avoid or reduce pollution in case of CSO events both in terms of volume and load.

This object is achieved by a method as claimed in claim 1.

SUMMARY OF THE INVENTION

The present invention has been designed to optimize the collection of wastewaters through sewer network systems specifically as it relates to the quality of wastewater being released into the environment. The invention can be implemented in sewer networks comprising CSO units equipped with actuators and sensing means (regardless of the sensor technologies and actuators used).

In the present text, the terms wastewater and sewage are used alternately, as synonyms.

The present invention derives inter alia from the following observations: in a sewage network there are normally many CSO units and it is therefore theoretically possible to maximize the capabilities of the combined sewage storage that the CSO basins together offer. CSO units that are relatively empty can have their outflow valves closed or throttled back. CSO units that are close to full can have their outflows valves further or fully opened. This can be done manually by an operator in a control room, however, there are now 'intelligent' controllers emerging that are much more efficient at performing this function. These controllers can also optimize the volume of wastewater directed to a WWTP.

One of the central limitations of these controllers is, however, that they are unaware of the concentration or the level of pollution (lightly contaminated vs. heavily contaminated) of the individual wastewater streams. In other words, sewer network systems are conventionally operated on the basis of the wastewater volumes, to minimize CSO events. Therefore, it may happen that undiluted or heavily contaminated sewage is discharged into the environment, while heavily diluted (lightly contaminated) sewage is sent to the WWTP.

Such control strategy based on volumes optimization has e.g. been disclosed by S. Gillé. D. Fiorelli, et al. in 'Optimal Operation of a Sewer Network Using a Simplified Hydraulic Model', 11th International Conference on Urban Drainage, Edinburgh, Scotland, UK, 2008; or by David Fiorelli, Georges Schutz in Sensibilité d'un contrôleur optimal sur un réseau d'assainissement unitaire par rapport à l'exactitude des previsions des debits entrants, NOVATECH 2010.

It is known, e.g. from EP1192107A1 to measure the pollutant concentration in the wastewater flow arriving at a treatment plant by means of sensors. However, this is not done at CSO units and hence pollution levels are not used to optimize flows. Furthermore, such measurements introduce so many servicing issues and measurement uncertainties to the point that the results produced by these measurement systems are most of the time not usable.

According to the present invention, a computer implemented method for operating a sewer network is proposed, the sewer network comprising a wastewater treatment plant, WWTP, a plurality of combined sewer overflow (CSO) units having one or more basins and a plurality of actuators for influencing the wastewater flows through said sewer network.

The method implements a wet weather control strategy comprising:

monitoring wastewater level and outflow inflow for at least a number of CSO units in a target zone of the network;

for the monitored CSO units, estimating a respective contamination index representing the pollutant load at each of the monitored CSO units based on:

- the wastewater inflow;
- drinking water consumption information in said a target zone of a water supply network;
- state information representative of a current state of parts of said sewer network corresponding to said target zone of water supply network, in particular linked to and/or geographically adjacent to the latter; and
- sewage information relating to sewage generated by users connected to the sewer network system, in particular based on a sewage generation model;

determining, at a network control unit, set-points for said actuators based on the contamination indexes associated with said CSO units.

The inventive method hence determines a sewage contamination classification, i.e. the contamination index, for part or all of the CSO units in the sewage network system, in order to be able to take a learned decision on the control of wastewater flows in the system. The network controller will use the contamination index, which provides information on the current pollutant level in the CSO unit, to operate the actuators, in order to give priority to some flows over others in the sewer network.

The contamination index is based on the determined inflow of wastewater at the CSO unit, taking into account the drinking water consumption and sewer network state information, as well as sewage information. The term sewage information is here used to designate information relating in particular to the quantity of sewage generated by the users connected to the sewer network in the area corresponding to the CSO unit. allowing for diurnal, weekend, holiday and seasonal effects. This is typically an undiluted sewage volume and concentration, that can be estimated by means of sewage generation models, as is known in the art, with various degrees of complexity. Preferably, the sewage generation model is configured to include patterns allowing for diurnal, weekend, holiday and seasonal effects, for the estimation of the generated sewage volumes. Any appropriate type of sewage generation model may be used, for estimating the sewage generated by users (pollution and/or industries) connected to a sewer network.

In particular, in case of rain, the network controller can use the contamination index to allow a certain volume of wastewater to overflow into the surface water, while conveying the remaining sewage to the WWTP. Here, CSO units with comparatively low pollutant concentration (low contamination index) can be allowed to overflow, whereas priority is given to convey the wastewater from CSO units having comparatively higher pollutant concentration towards the WWTP.

As used herein, the term "contamination index" designates the load of pollutant present in the CSO unit. Depending on the embodiments, the contamination index can be expressed in different ways, for example as a concentration or amount in any appropriate unit, or as a relative value. The contamination index may also be expressed as a scale, score or code, based on conversion of numerical values.

Advantageously, a calibration cycle is carried out for each CSO unit during dry weather flow situation (implemented by a dry weather strategy), by which the outlet valve of the CSO unit is closed and the inflow is deduced from the wastewater level measurement.

Furthermore, a piping dilution factor, noted $FC(t)$, is learned during dry weather flow situation, representing the ratio of the flow of drinking water consumption over the flow of wastewater.

These and other embodiments are further recited in the appended dependent claims.

According to another aspect, the invention relates to a sewer network system comprising a wastewater treatment plant, WWTP, a plurality of combined sewer overflow, CSO, units having one or more basins, a plurality of actuators for influencing wastewater flow through said sewer network, and a control unit including a data-processing apparatus (typically a microprocessor) that is configured for implementing the method as disclosed herein.

According to still another aspect, the invention relates to a computer program product comprising instructions which, when the program is executed by a computer, cause the computer to carry out the steps of the method as disclosed herein.

BRIEF DESCRIPTION OF THE DRAWINGS

The present invention will now be described, by way of example, with reference to the accompanying drawings, in which:

Fig. 1: is a schematic diagram of a combined sewer network.

Fig. 2: shows schematic diagrams illustrating identical sewer networks with (a) an incorrect control strategy and (b) a correct control strategy;

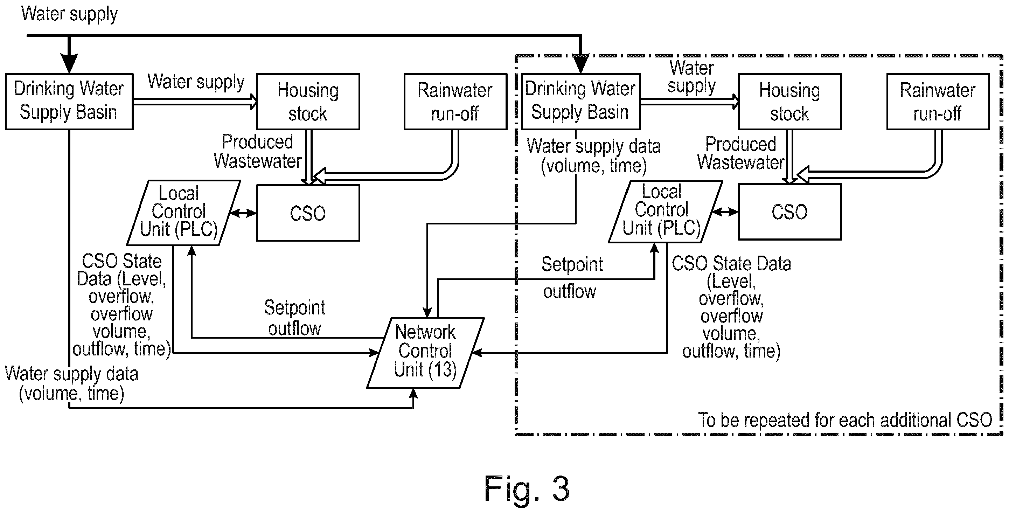

Fig. 3: is a flow diagram of a network (both sewer and water distribution) in which the present method can be implemented.

DETAILED DESCRIPTION OF PREFERRED EMBODIMENTS

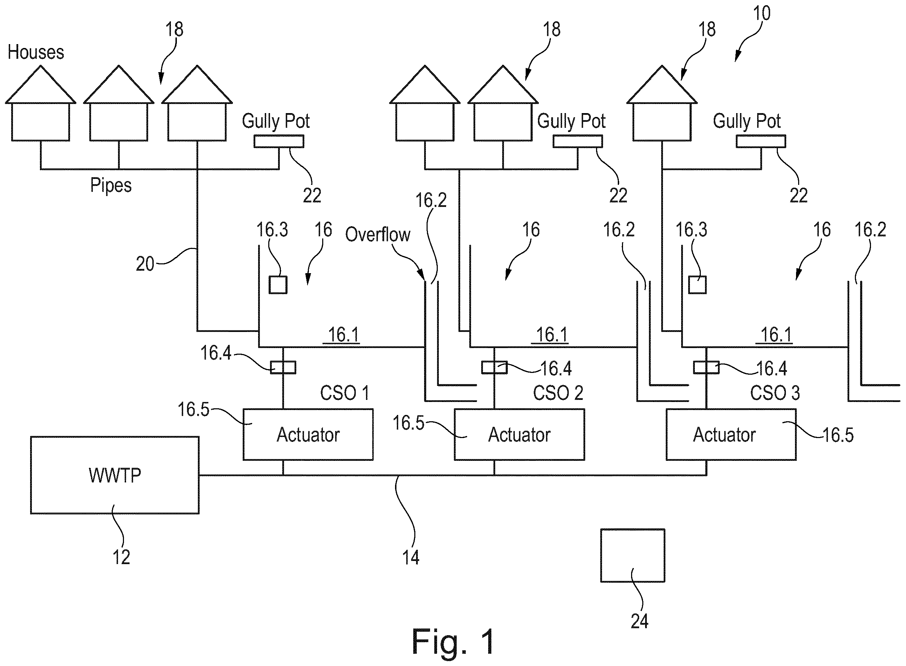

Fig.1 schematically shows a combined sewer network 10 that is adapted to convey wastewater to a wastewater treatment plant 12. In the shown embodiment, the sewer network 10 comprises an interceptor ducting 14 that collects wastewater from a number of sections containing combined sewer overflow units 16, in order to convey the wastewater to the WWTP 12. Within each section, wastewater generated by households 18 is collected via pipes 20 to the corresponding CSO unit 16. Rainwater is also collected in the sewage network, e.g. via gully pots 22 (or other appropriate systems) connected to the piping 20 upstream of the CSO units 16.

Each CSO unit 16 comprises at least one basin 16.1 that is equipped with an overflow device 16.2, such as, e.g., an overflow wall, weir or funnel by which wastewater can flow from the CSO unit 16 into the environment, e.g. to surface waters such as a river, a lake, a sea or the ocean. Each CSO unit 16 is further equipped with a level monitoring device 16.3 to measure the level of wastewater contained therein, as well as outflow monitoring means 16.4.

The level monitoring device 16.3 may comprise an ultrasound or pressure sensor, allowing monitoring the level of sewage in one or more basins. The outflow monitoring means 16.4 are configured to measure the flow of wastewater out of the CSO unit; they mainly comprise water sensing devices, mostly conductivity based. These are only examples of level and outflow monitoring means and the present invention is not limited to any measurement technology.

Each CSO 16 further includes at least one actuator 16.5 that is operable to influence the flow of wastewater downstream of the CSO unit 16. Such actuator 16.5 may typically be a gate valve or a pump. A gate valve permits closing, opening or throttling the flow of wastewater leaving the CSO unit 16, via the interceptor conduit 14, towards the WWTP 12. A pump (not shown) is likewise operable at different flowrates or different timed intervals, in order to promote storage or emptying of the CSO unit 16, and hence send more or less wastewater towards the WWTP 12.

Fig.1 is simplified but it will be apparent to those skilled in the art that the sewer network 10 of Fig.1 is associated with an urban area, or part thereof, so that the CSO units 16 receive flows from a number of sewage ducts connected to a variety of entities such as houses, condominiums, buildings for commercial or industrial use, etc.

The sewer network 10 is thus designed to collect the wastewater from the households, buildings etc. towards the WWTP but also collect rainwater through gully pots (or the like) to convey them towards the WWTP trough the CSO units. Gully pots 20 normally collect water from roof drains and sealed surfaces. Altogether, the sewer network 10 is therefore designed to provide a buffer for combined sewage so that it can be later conveyed to the WWTP 12.

Also associated with this urban area is a drinking water distribution network (not shown in Fig.1) that comprises one or more drinking water supply basins or tanks connected via drinking water conduits to the houses and buildings.

The combined sewer network 10 of Fig.1 corresponds to a modern infrastructure. The present invention proposes an improved method of operating such combined sewer network 10.

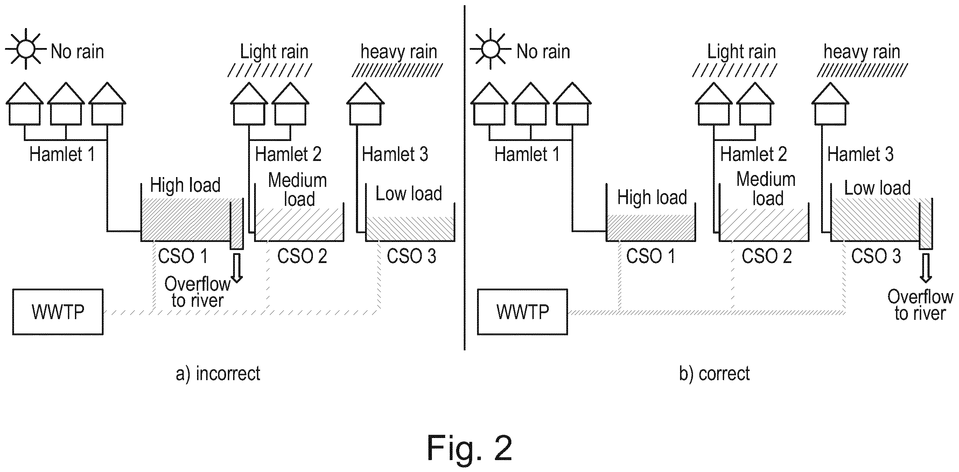

The conventional operating approach for such network, based on volumetric control, is not optimal and illustrated in Fig.2 a). One will recognize the network layout of Fig.1. Sensors and actuators are omitted in the Figure. According to conventional practice, the flows from the CSO units 16 to the WWTP are optimized based on volumes, regardless of the pollutant load.

Figs. 2 a) and b) are schematic diagrams of two identical sewer networks, which serve to illustrate an error that a controller which is not aware of the pollutant load can make. In Fig.2, 'highly loaded' means 'highly polluted', whereas 'low load' indicates a low pollutant concentration. One will recognize the network layout of Fig.1, sensors and actuators being omitted for clarity of the drawings. Figure 2a shows the incorrect response, corresponding to the conventional approach, whereby due to volumetric-based control strategy, the highly loaded sewage from hamlet 1 is discharged to river, while the sewage with a low load from hamlet 3 is conveyed to the WWTP 12. Figure 2b shows the correct response, where highly loaded sewer from hamlet 1 is conveyed to the WWTP 12 while diluted sewage with a low pollutant load is allowed to overflow to the river. Fig.2b corresponds to the principle of the present method.

Turning now to Fig. 1, reference sign 24 designates a network control unit that can be, e.g., arranged within a building of the sewage network operator. The network control unit normally includes a computer architecture, in particular with a processor, a volatile memory, a non-volatile memory and a communication interface. The network control unit's non-volatile memory is configured to store code instructions that permit to implement methods for controlling the sewage network.

The network control unit 24 is connected, in a wired or wireless manner, in particular to the above-mentioned actuators and monitoring/sensing means. In practice, the connection of the network control unit 24 to the actuators and monitoring/sensing means may be done directly or indirectly via a Local Control Unit (or PLC: Programmable Logic Controller). The network control unit 24 thus receive network state information, in particular information about CSO outflow and level. Based on information from the various sensors, the network control unit will, based on the method, act on the various actuators (in particular gate valves and pumps) to influence the flows through the networks, giving e.g. priority to some CSO units over other CSO units to convey their flows to the WWTP.

In embodiments, data is taken from the drinking water supply basins in the same target zone as the CSOs. This data is passed to the Network Control Unit, where the estimation of the contamination index and the resulting setpoint outflow for each CSO is calculated. This setpoint is then passed back to the local controller (PLC=Programmable Logic Controller) of the CSO, which ultimately implements this setpoint.

According to the present invention, the network control unit 24 implements a method, which is designed to control the flow of sewage/wastewater to the WWTP based on the pollution concentration at the individual CSO units.

It should be noted here that the present method does not rely on actual measurement of some pollutant concentration but realizes an estimation (or proxy) of the pollutant load arriving at the various CSO units. Accordingly, a contamination index reflecting this pollutant load is determined for the CSO units.

The contamination index representing the pollutant load in each CSO unit is estimated at the network control unit 24 based on the following information:

- inflow of wastewater at the CSO unit;
- drinking water consumption information representative of dynamic water distribution in a target zone of a water supply network; and
- state information representative of a current state of parts of said sewer network corresponding to the target zone of the water supply network
- sewage information/data including sewage quantities obtained from a computer model, the sewage generation model, that estimates sewage volumes generated by the users connected to the corresponding network area.

In order to provide a real time control of the sewage network, the contamination index is estimated periodically, preferably several times per hour, or more. The actuators of the sewage network are then actuated based on updated knowledge of the pollutant load within the different CSOs located within the sewer network, enabling a dynamic management of the wastewater flows. It is then possible to authorize an overflow for one or many CSOs having a low pollutant load (low contamination index), whereas priority is given to convey wastewater from one or many highly polluted CSO units (reflected by a higher contamination index) to the WWTP.

The inflow is calculated based on the measured wastewater level and on the outflow. In practice, during wet weather situation the outflow is an output parameter. That is, a desired outflow is determined and set by the control strategy. The actuators, e.g. gate valves, are actuated to obtain the desired outflow and the actual outflow is measured by the outflow sensor 16.4. The desired outflow can thus be controlled in closed loop.

The drinking water consumption information reflects the water demand in a target zone of the water distribution system at a given time. The target zone is the zone in which water is distributed that supplies the same geographical area of the sewer system that contains the actual CSO unit for which the contamination level is to be estimated. The water consumption is typically measured by counters at the different drinking water tanks of the water supply network.

The state information, in turn, reflects with the flows and levels in the CSO units within a zone that is linked to and/or geographically adjacent to the target zone of the water supply network.

In case of dry weather, the flow through a CSO unit is referred to as dry weather flow, DWF. Where the flow is too low to be measured by the CSO outflow sensor, the DWF can be estimated from the drinking water consumption. Also, the flow into the CSO unit can be determined by means of automatic calibrations: the outlet gate of a CSO unit, or a pump thereof, during DWF is closed and the evolution of the level in the basin(s) (or tank or sump) is monitored for a given period. The gate valve is then opened again.

Estimation of the contamination index may further consider historical information about the state of the sewer network in the target zone.

Based on the above information, the contamination index is estimated and can be expressed in any appropriate way, for example as a concentration or amount in any desired unit, or as a relative value. The contamination index may also be expressed as a scale, score or code, based on conversion of numerical values. Typically, the higher the index value, the greater the pollutant concentration. The knowledge of the pollutant load in the sewer system, as reflected by the contamination index of each CSO unit, allows developing different control strategies for the sewer system, by sending corresponding commands to the different actuators.

Examples of control strategies are given below:

- during a wet weather situation, the contamination indexes are used by the network control unit to convey wastewater from the CSOs with the higher pollutant loads to the WWTP, while allowing a certain volume of wastewater to overflow into the surface water at CSO units with lower pollutant loads.
- The contamination indexes are used by the network control unit to store a volume of wastewater in the sewer system, using this storage for peaks shaving of wastewater load with the aim of offering a certain, more constant, wastewater load to a WWTP. Peak-shaving, here, is the practice of reducing fluctuations in volume and load at the outlet of the network.
- The contamination indexes are used by the network control unit to both decide which load of wastewater to direct to an overflow and decide at which point to let this water overflow. An example is to let an overflow happen on just one part of a beach that then subsequently needs to be cleaned, instead of allowing smaller overflows on several beaches that then all need to be cleaned.
- The contamination indexes are used by the network control unit to store a volume of wastewater with a particularly low load in the sewer system for a longer period of time, knowing that this volume will produce very little settled material, thereby reducing blockages in the system.
- The contamination indexes are used by the network control unit to estimate a leakage level of the water supply system, a non-sewer entrant fraction of the water supply system, an infiltration and an exfiltration fraction of the sewer system

**1) Flow parameters**

For optimum operation, the network control unit is configured, for estimating the contamination indexes, to determine flows through the sewer network by considering the following intervening parameters.

**a) Leakage Fraction**

The leakage fraction, also called unaccounted for water or non-revenue water (NRW), is the part of water from the water supply net that does not arrive at the costumer i.e. households, buildings etc.

An algorithm is used to generate a daily water consumption pattern. A water night-time demand is determined therefrom, which is normally considered a good estimation of the leakage rate. The algorithm used in the daily water consumption pattern is based on taking a representative number of daily (24 hourly) consumptions and calculating the minimum night flow (MNF), an hourly average and a 68, 95 and 99.7% confidence interval around the average. In an embodiment, the difference between a zero flow and the MNF is considered the leakage rate.

A value for the leakage fraction as a fraction of the supplied volume is often considered. In this respect a suitable leakage fraction may lie in the range 10-20% of the delivered water volume. This leakage fraction has a noticeable effect on the estimated sewer load and therefore on the pollution index.

**b) Non-sewer entrant fraction**

The non-sewer entrant fraction is the fraction of delivered water that does not enter the sewer. A good portion of this normally consists of the water that people use to water gardens, clean pathways (not connected to gully pots), drinking-water, evaporation processes or for swimming pools. Further, industrial examples are industry cooling processes and water used in production processes. The non-sewer entrant fraction is estimated by means of an algorithm comparing drinking water demand with the inflow of the CSO units during dry weather flow over longer time periods, e.g. several months. In general, this fraction will be time dependent.

In cities, the non-sewer entrant fraction is usually low and can be neglected. Similarly, in winter, gardens are not frequently watered (in most of Europe).

### c) Infiltration fraction

The Infiltration fraction is estimated and reflects an amount of water entering the sewage network from other sources than household sewage or rain.

Typically, this Infiltration fraction is calculated if the CSO unit inflow during DWF is larger than the water usage during dry weather. This can be surface water infiltration or groundwater infiltration. Pattern recognition algorithms are used by the network control unit to make this distinction.

The above parameters (a-c) indicative of the flows within the sewer network can be used (in part or all of them) to estimate the relative pollutant concentration arriving at the CSO units.

### 2) Undiluted sewage concentration.

The network control unit is configured to estimate an undiluted sewage concentration by means of the sewage generation model for the population or more generally the users connected to the network. The model generates sewage information including generated sewage quantities (volumes or concentrations), for various time periods (time/day/month), also referred to as undiluted sewage concentration in the following.

The sewage generation model may advantageously be configured to include patterns allowing for diurnal, weekend, holiday and seasonal effects, for the estimation of the generated sewage volumes.

Indeed, from the estimated number of people living in the area, especially areas with little industry, empirical or phenomenological models are well documented in the literature, and can be implemented in the network control unit to estimate how much sewage is generated by a certain number of people at each moment during the day. Any appropriate sewage generation model can be used.

An example of know sewage generation model has been proposed by Gernaey, K.V., Flores-Alsina, X., Rosen, C. et al. in 'Dynamic influent pollutant disturbance scenario generation using a phenomenological modelling approach', Environmental Modelling & Software, Vol. 26, Issue 11, 2011, 1255-1267.

Furthermore, the output of the sewage generation model can be compared with WWTP sludge production or inlet data to make a more detailed calibration.

### 3) Diluted sewage concentration

Once the above factors are estimated, a diluted sewage concentration at the inflow of a CSO unit can be estimated at each moment in time during the day by taking the estimated undiluted sewage concentration and adjusting this value with all the determined fractions above.

When the wastewater volume arriving at the CSO unit varies outside of the dry weather flow plus infiltration, then the drinking water demand, the leakage fraction, the non-sewer entrant fraction and the estimated undiluted sewage concentration will be used to calculate the diluted sewage fraction.

Advantageously, the network control unit is configured to implement control strategies that correspond to four main situations in the sewer network linked to the weather condition: dry weather, wet weather, wet to dry and dry to wet.

### 3.1 Dry weather flow

This is a situation where it has not rained for an extended period. In this state, it is possible to gather data which helps with the calibration of the system.

In this period, the flow of drinking water delivered to the users can be expected to be collected as wastewater, whereby the relationship:

$$Q_{Wastewater}(t) = Q_{Water}(t, t_{offset}) \qquad \text{(Eq. 1)}$$

Where $Q_{water}$ and $Q_{wastewater}$ are system parameters corresponding respectively to the flows (flow rates) of drinking water delivered to network users and to the flow of wastewater entering a given CSO. The variables for these parameters are indicated between brackets. In operation, the parameters are evaluated in real time and thus vary with time t. Whereas the flow rate of drinking water over a given time period can be known precisely by flow meters, this water will only arrive after a given time to the CSO. This time period reflecting the delay between the delivery of drink water and the time it arrives at a given CSO is noted $t_{offset}$.

This equation (1) may be true, but only if there is no infiltration, no exfiltration and no non-sewer entrant fraction. Else the relationship can be written as:

$$Q_{Wastewater}(t) = Q_{Water}(t, t_{offset})$$
$$+Q_{Infiltration}\left(h_{groundwater}(t), h_{surfacewater}(t)\right)$$
$$-Q_{Exfiltration}\left(h_{groundwater}(t), h_{surfacewater}(t)\right)$$
$$-Q_{Non-SewerFraction}(t, t_{offset}, T, RH)$$

$$\text{(Eq. 2)}$$

Where h=level (height of wastewater in CSO basin), T=Temperature, RH=Relative Humidity.

Hence, the flow of wastewater may be estimated as the sum of the drinking water flows and infiltration flows, less the exfiltration flows and non-sewer fraction flows. Infiltration and exfiltration depend on the groundwater and surface water levels. The non-sewer fraction varies with temperature and relative humidity, reflecting the outer weather conditions. The non-sewer fraction will be higher during summer (hot and dry), e.g. due to garden watering.

However, during dry weather flow it is often difficult to measure sewage flow as the flows are low compared to the range of the measurement devices.

### 3.1.1 Calibration

Therefore, it will be appreciated that the present method implements, during DWF, intermittent calibration cycles inside the sewage system to determine the dry weather inflow to the CSO unit. This can be done by temporarily shutting off the outlet valve (i.e. actuator) of a CSO unit and monitoring the level in the basin(s). In such case, the outflow is zero and the inflow can be deduced from the level measurement that is generally more accurate than flow measurement devices at low flows. During a calibration cycle, the amount of wastewater flowing into the CSO can be written:

$$Q_{Wastewater}(t) = dV/dt = A(h)\, dh/dt \qquad \text{(Eq. 3)}$$

Where V is the wastewater volume, A the surface area of the CSO basin(s) and is h the wastewater height in the CSO basin(s).

### 3.1.2 Pollutant load during Dry Weather Flow

In some cases (outside the summer months and/or in cities) the $Q_{Non-SewerFraction}$ may be 0 and, in many cases, there is a clear infiltration or exfiltration situation. In such cases, we have:

$$Q_{Wastewater}(t) = Q_{Water}(t, t_{offset}) + Q_{Infiltration}(h_{groundwater}(t), h_{surfacewater}(t)) \qquad \text{(Eq. 4)}$$

Or

$$Q_{Wastewater}(t) = Q_{Water}(t, t_{offset}) - Q_{Exfiltration}(h_{groundwater}(t), h_{surfacewater}(t)) \qquad \text{(Eq. 5)}$$

The infiltration and exfiltration issue can also be represented as a factor over time FC(t) defined as:

$$FC(t) = \frac{Q_{Water}(t, t_{offset})}{Q_{Wastewater}(t)} \qquad \text{(Eq. 6)}$$

As will be understood, the factor FC(t) equals 1 when no infiltration or exfiltration is present, is >1 when there is exfiltration and <1 when there is infiltration.

Advantageously, a self-learning system is used to estimate this factor FC(t) during DWF for each CSO and year season.

If we now simplify the situation somewhat and assume that we conserve the pollutant load (with other words, the pollutant load of both the infiltration and exfiltration water is considered 0) then we can postulate that the concentration of the wastewater arriving at the CSO is:

$$C_{WastewaterCSO}(t) = C_{WastewaterHH}(t, t_{offset}) \times FC(t) \qquad \text{(Eq. 7)}$$

Where $C_{WastewaterHH}$ is the pollutant concentration of the wastewater leaving the households associated with the CSO unit. This is an undiluted sewage concentration obtained from computer models, as explained.

In other words, during dry weather conditions, the pollutant concentration in the wastewater at a CSO corresponds to the pollutant concentration in the flows leaving the households, corrected by parameter FC(t), which reflects the addition or subtraction of water though the sewer piping to the CSO.

In the present method, the factor FC(t) is thus determined during dry weather flow. The learning system is configured determine FC(t) periodically during the season, during DWF. Of course, the piping condition may change with time (cracks may appear, etc.) and will thus evolve.

It may be noted here that in DWF situation, the various flow parameters described above are rather similar for a given weekday and time period. Hence, these flow parameters can be mapped over time. For example, flow parameter values may be stored for different time periods of the day, over the whole year.

Hence, FC(t) may e.g. be stored as in table containing FC values mapped in function of time and day.

### 3.2 Wet weather

This refers to a situation where it rains, continuously or intermittently. In this period the network control unit is active and controlling the outflow of the CSO's to get an optimal performance.

This period can be sub-divided into two sub-states:

a) No overflow

The inflow is low enough to not have a CSO overflow. In this situation the CSO outflow can be measured with acceptable degree of accuracy and with the level measurement in a CSO, the CSO inflow can be estimated. Therefore, the CSO outlet concentration can be estimated by also knowing the drinking water consumption and equation 7 is basically conserved but now includes a term $Q_{rain}$ (Equation 8). This the term $Q_{wastwater}$ is unknown, but is estimated using the factor $FT(t_{dwf})$ (Equation 9).

$$C_{WastewaterCSO}(t, t_{offset}) = C_{WastewaterHH}(t) \times FT(t_{dwf}) \times \frac{Q_{Wastewater}(t, t_{offset})}{Q_{rain(t, t_{offset})}}$$

$$\text{(Eq. 8)}$$

Which can be simplified as:

$$C_{WastewaterCSO}(t, t_{offset}) = C_{WastewaterHH}(t) \times FT(t_{dwf}) \times \frac{Q_{Wastewater}(dwf, t, t_{offset})}{Q_{rain(t, t_{offset})}}$$

$$\text{(Eq. 9)}$$

Where:

$$Q_{rain(t, t_{offset})} = Q_{total}(calculated) - Q_{Wastewater}(dwf, t, t_{offset})$$

$$\text{(equation 10)}$$

The factor $FT(t_{dwf})$ is the same as factor FC(t) in the previous section. The notation $FT(t_{dwf})$ is however adopted for the sake of explanation, meaning that this FT factor is not learned during a wet weather situation, but simply read from table FC(t) for the same time period.

In equation 9, the flow of wastewater if noted $Q_{wastewater}(dwf, t, toffset)$ to indicate that the value of $Q_{wastewater}$ corresponding to DWF is used.

With reference to Eq.9, the value $C_{wasterwaterCSO}$ represents the pollutant load in the CSO, i.e. the contamination index.

Alternatively, one could express the contamination index as the following dimensionless ratio by rewriting Eq.9:

$$Contamination\ index = \frac{C_{WastewaterCSO}(t,t_{offset})}{C_{WastewaterHH}(t)} = FT(t_{dwf}) \times$$

$$\frac{Q_{Wastewater}(dwf,t,toffset)}{Q_{rain(t,toffset)}}\ (Eq.\ 11)$$

b) CSO overflow

The inflow exceeds the capacity of the CSO and there is an overflow.

This is the point where the pollution load (inflow concentration) in each CSO becomes important. Typically, rain pollution is considered 0.

According to the present method, during wet weather, a wet weather control strategy is implemented, wherein the regulation of the CSOs is carried out with the knowledge of the estimated pollution load, as reflected by the contamination index.

The conventional regulation of CSO overflow is done on the basis of volumes using a cost function. Indeed, for each CSO that overflows it is possible to minimise (or maximise) the overflow $\varphi$:

$$\varphi(n) = \sum_{i=1}^{n}[Ov(n) - NL]\ (Eq.\ 12)$$

Where Ov is the Overflow volume of the nth CSO and NL a negative large value. See e.g. the above-mentioned articles by S. Gillé et al and D. Fiorelli et al..

Thanks to the present invention, the CSO overflows can be regulated based on the pollution load, giving priority to convey most polluted flows to the WWTP and letting less polluted CSOs overflow.

In order to minimise the overflow load m, the following cost function is proposed:

$$m(n) = \sum_{i=1}^{n}[(Ov(n) * C_{WastewaterCSO}) - NL]\ (Eq.\ 13)$$

Therefore, the wet weather situation is the one where the control of the sewer network system based on the contamination indexes (as reflected by $C_{wastewaterCSO}$) will prove particularly advantageous, in order to convey the most flow from the CSO's with the most important pollutant loads to the WWTP.

It may be noted that during the duration of a WWF event, the table FC(t) (and thus FT(t)) is considered constant, i.e. it is not modified and correspond to the last valid values that have been determined.

**3.3 Moving from wet-weather flow to dry weather flow**

In this state the sewage network system is emptying and the pollutant concentration in the inflows to the CSO units increases because $Q_{rain}(t)$ is getting less important.

Here, the following aspects are generally taken into account:

a) When is DWF re-established? There are several estimates for this in terms of volume flows.

However, in the present method the fact that a CSO is empty can be considered as a measure of DWF while empty is defined as a level that is lower than 10% of the overflow level.

b) Normally the volume in each CSO is considered and each CSO is emptied homogeneously: i.e. the relative volume in each CSO is kept at the same value. However, thanks to the present method, there is the opportunity to also minimize the total load in the CSOs. Here the present method makes use of a single piece of weather information, which can either be derived from the operator or from a weather service: If the chance of further rain is considered significant then the system will tend to give preference to the CSO's that still contain a significant volume, when the change of further rain is considered insignificant then the system will prioritize volumes with the highest concentrations.

**3.4 Moving from dry weather to wet weather**

In this state the CSO's are either empty or they have still got wastewater from the last rain event, but they are filling fast with or without a first flush. The amount of material flushed from the pipes is almost impossible to predict.

However, the period of time a first flush lasts is fairly simple to estimate based on the geometry of the system, the total runoff volume and the peak flow. The concentration of the first flush can now be estimated (albeit with a very large uncertainty) as a function between these factors and a number of functions for this have been suggested for this in the literature. This value is calculated for each CSO and added to the estimation.

**Claims**

1. A computer implemented method for operating a sewer network system comprising a wastewater treatment plant, WWTP, (12) a plurality of combined sewer overflow, CSO, units (16) having one or more basins (16.1), a plurality of actuators (16.5) for influencing wastewater flow through said sewer network,
   wherein said method implements a wet weather control strategy comprising:

   monitoring wastewater level and inflow for at least a number of CSO units;
   for said monitored CSO units, estimating a respective contamination index representing the current pollutant load at each of said monitored CSO units based on:

   - the wastewater inflow;
   - drinking water consumption information in a target zone of a water supply network;
   - state information representative of a current state of parts of said sewer network corresponding to said target zone of water supply network, in particular linked to and/or geographically adjacent to the latter; and
   - sewage information relating to sewage generated by users connected to the sewer network system, in particular based on a sewage generation model;

   determining, at a network control unit, set-points for said actuators based on the contamination indexes associated with said CSO units.

2. The method according to claim 1, wherein a calibration cycle is carried out for each CSO unit during dry weather flow situation, by which an outlet valve of the CSO unit is closed and the inflow is deduced from the wastewater level measurement.

3. The method according to claim 1 or 2, wherein a piping dilution factor FC(t) is learned during dry weather flow situation, representing the ratio of the flow of drinking water consumption over the flow of wastewater.

4. The method according to claim 1, 2 or 3, wherein the contamination index representing the pollutant load arriving at a CSO during wet weather is estimated as a concentration $C_{WastewaterCSO}$ based on the formula:

$$C_{WastewaterCSO}\big(t, t_{offset}\big)$$

$$= C_{WastewaterHH}(t) \times FT\big(t_{dwf}\big) \times \frac{Q_{Wastewater}(dwf, t, toffset)}{Q_{rain(t,toffset)}}$$

where:

$C_{WastewaterHH}(t)$ is the estimated pollutant concentration of the wastewater leaving the households; $Q_{wastewater}(dwf, t, toffset)$ is the flow rate of wastewater corresponding to a dry weather flow situation at the same time period;
$Q_{rain}$ is the flow of rain water; and
$FT(t_{dwf})$ is a factor over time defined as a ratio of drinking water $Qwater$ over $Q_{wastewater}$, learned during dry weather conditions.

5. The method according to claim 4, wherein said wet weather control strategy is designed to minimize the following cost function:

$$m(n) = \sum_{i=1}^{n}[(Ov(n) * C_{WastewaterCSO}) - NL]$$

where m is the overflow load, Ov is the overflow volume for the nth CSO and NL a negative large number.

6. The method according to any one of the preceding claims, wherein said consumption information is based on measurements at predetermined locations within said water supply network; and/or

wherein said state information includes inflow and level information at the CSO within the target area; and/or wherein estimating said contamination index comprises determining incoming flows at CSO units by taking into account a leakage fraction, a non-sewer entrant fraction and an infiltration fraction.

7. The method according to claim 6, wherein said network control unit is configured to estimate an undiluted sewage concentration, and wherein a diluted sewage concentration at the inflow of CSO units is computed based on said undiluted sewage concentration and said leakage fraction, non-sewer entrant fraction and infiltration fraction.

8. The method according to 6 or 7, wherein said leakage fraction is estimated based on a difference between a zero flow and a minimum night flow; and preferably said minimum night flow is computed based on drinking water consumption values derived from an algorithm generating a daily drinking water consumption pattern.

9. The method according to any one of claims 6 to 8, wherein estimating said leakage fraction further includes taking into account the population depending on the related water supply network and/or the volumes discharged from the water supply network.

10. The method according to any one of claims 6 to 9, wherein said non-sewer entrant fraction is estimated by means of an algorithm comparing drinking water demand with the inflow of the CSO units during dry weather flow over longer time periods; and/or

wherein said infiltration fraction is estimated by means of pattern recognition algorithms; and/or wherein said undiluted sewage concentration is estimated based on the sewage generation model for the population depending on the sewage network system.

11. The method according to any one of the preceding claims, wherein the generation model includes diurnal patterns allowing for weekday, weekend, holiday and seasonal effects, whereby the sewage generation model outputs sewage information including sewage amounts for a given time period.

12. The method according to any one of the preceding claims, wherein in case of a weather situation moving from wet-weather flow to dry weather flow, a wet to dry weather strategy is implemented, wherein if a chance of further rain is considered significant, priority is given to CSO units that still contain a significant volume, and a chance of further rain is considered insignificant, priority is given to CSO units for which the contamination index reflects the highest pollutant loads.

13. The method according to any one of the preceding claims, wherein in case of a weather situation moving from dry weather to wet weather, a dry to wet weather is implemented, wherein pollutant concentration of a first flush is estimated as a function network system geometry, total runoff volume and peak flow.

14. A sewer network system comprising a wastewater treatment plant, WWTP, (12) a plurality of combined sewer overflow, CSO, units (16) having one or more basins (16.1), a plurality of actuators (16.5) for influencing wastewater flow through said sewer network, and a control unit including a data-processing apparatus that is configured for implementing the method according to any one of claims 1 to 13.

15. A computer program product comprising instructions which, when the program is executed by a computer, cause the computer to carry out the steps of the method as claimed in any one of claims 1 to 13.

**Patentansprüche**

1. Computerimplementiertes Verfahren zum Betreiben eines Kanalisationsnetzsystems, das eine Abwasseraufbereitungsanlage (WWTP) (12), eine Vielzahl von Mischwasserüberlaufeinheiten, CSO-Einheiten (16) mit einem oder mehreren Becken (16.1), eine Vielzahl von Stellgliedern (16.5) zur Beeinflussung des Abwasserflusses durch das Kanalisationsnetz umfasst,

wobei das Verfahren eine Strategie der Kontrolle in Bezug auf nasses Wetter implementiert, die Folgendes umfasst:

Überwachen des Abwasserpegels und -zuflusses für mindestens eine Anzahl von CSO-Einheiten;
für die überwachten CSO-Einheiten, Schätzen eines jeweiligen Kontaminationsindexes, der die aktuelle Schadstoffbelastung an jeder der überwachten CSO-Einheiten darstellt, basierend auf:
dem Abwasserzufluss;

- Informationen zum Trinkwasserverbrauch in einer Zielzone eines Wasserversorgungsnetzes;
- Zustandsinformationen, die den aktuellen Zustand von Teilen des Kanalisationsnetzes darstellen, die der Zielzone des Wasserversorgungsnetzes entsprechen und insbesondere mit letzterem verbunden und/oder geografisch angrenzend sind; und
- Abwasserinformationen in Bezug auf Abwasser, das von an das Kanalisationsnetzsystem angeschlossenen Benutzern erzeugt wird, insbesondere auf der Grundlage eines Modells der Abwassererzeugung;

Bestimmen, in einer Netzsteuerungseinheit, von Sollwerten für die Stellglieder basierend auf den Kontaminationsindizes, die den CSO-Einheiten zugeordnet sind.

2. Verfahren nach Anspruch 1, wobei ein Kalibrierungszyklus für jede CSO-Einheit während einer Trockenwetter-Strömungssituation durchgeführt wird, bei dem ein Auslassventil der CSO-Einheit geschlossen wird und der Zufluss aus der Abwasserpegelmessung abgeleitet wird.

3. Verfahren nach Anspruch 1 oder 2, wobei ein Rohrleitungsverdünnungsfaktor FC(t) während der Trockenwetter-Strömungssituation ermittelt wird, der das Verhältnis des Durchflusses des Trinkwasserverbrauchs zu dem Durchfluss des Abwassers darstellt.

4. Verfahren nach Anspruch 1, 2 oder 3, wobei der Kontaminationsindex, der die Schadstoffbelastung darstellt, die bei nassem Wetter an einem CSO ankommt, als Konzentration $C_{WastewaterCSO}$ basierend auf der folgenden Formel geschätzt wird:

$$C_{WastewaterCSO}\left(t, t_{offset}\right)$$

$$= C_{WastewaterHH}(t) \times FT\left(t_{dwf}\right) \times \frac{Q_{Wastewater}(dwf, t, toffset)}{Q_{rain(t, toffset)}}$$

wobei:

$C_{WastewaterHH}(t)$ die geschätzte Schadstoffkonzentration des die Haushalte verlassenden Abwassers ist;
$Q_{wastewater}(dwf, t, toffset)$ die Durchflussrate des Abwassers ist, die einer Trockenwetter-Durchflusssituation im gleichen Zeitraum entspricht;
$Q_{rain}$ der Durchfluss von Regenwasser ist; und
$FT(t_{dwf})$ ein Faktor über die Zeit ist, der als Verhältnis von Trinkwasser $Q_{water}$ zu $Q_{wastewater}$ definiert ist und bei trockenen Wetterbedingungen ermittelt wird.

5. Verfahren nach Anspruch 4, wobei die Strategie der Kontrolle in Bezug auf nasses Wetter darauf ausgelegt ist, die folgende Kostenfunktion zu minimieren:

$$m(n) = \sum_{i=1}^{n} [(Ov(n) * C_{WastewaterCSO}) - NL]$$

wobei m die Überlauflast ist, Ov das Überlaufvolumen für den n-ten CSO und NL eine negative große Zahl ist.

6. Verfahren nach einem der vorhergehenden Ansprüche, wobei die Verbrauchsinformationen auf Messungen an vorbestimmten Orten innerhalb des Wasserversorgungsnetzes basieren; und/oder

wobei die Zustandsinformationen Zufluss- und Pegelinformationen an dem CSO innerhalb des Zielgebiets umfassen; und/oder

wobei das Schätzen des Kontaminationsindexes das Bestimmen der eingehenden Ströme an CSO-Einheiten unter Berücksichtigung eines Leckageanteils, eines nicht in die Kanalisation eintretenden Anteils und eines Infiltrationsanteils umfasst.

7. Verfahren nach Anspruch 6, wobei die Netzsteuereinheit so konfiguriert ist, dass sie eine unverdünnte Abwasserkonzentration schätzt, und wobei eine verdünnte Abwasserkonzentration am Zufluss von CSO-Einheiten auf der Grundlage der unverdünnten Abwasserkonzentration und des Leckageanteils, des nicht in die Kanalisation eintretenden Anteils und des Infiltrationsanteils berechnet wird.

8. Verfahren nach Anspruch 6 oder 7, wobei der Leckageanteil auf der Grundlage einer Differenz zwischen einem Nulldurchfluss und einem minimalen Nachtdurchfluss geschätzt wird; und
vorzugsweise der minimale Nachtdurchfluss auf der Grundlage von Trinkwasserverbrauchswerten berechnet wird, die von einem Algorithmus abgeleitet werden, der ein tägliches Trinkwasserverbrauchsmuster erzeugt.

9. Verfahren nach einem der Ansprüche 6 bis 8, wobei das Schätzen des Leckageanteils ferner die Berücksichtigung der Bevölkerung in Abhängigkeit vom zugehörigen Wasserversorgungsnetz und/oder den aus dem Wasserversorgungsnetz abgeleiteten Mengen umfasst.

10. Verfahren nach einem der Ansprüche 6 bis 9, wobei der nicht in die Kanalisation eintretende Anteil mit Hilfe eines Algorithmus geschätzt wird, der den Trinkwasserbedarf mit dem Zufluss der CSO-Einheiten bei Trockenwetterströmung über längere Zeiträume vergleicht; und/oder

wobei der Infiltrationsanteil mit Hilfe von Mustererkennungsalgorithmen geschätzt wird; und/oder
wobei die unverdünnte Abwasserkonzentration basierend auf dem Abwassererzeugungsmodell für die Bevölkerung in Abhängigkeit vom Abwassernetzsystem geschätzt wird.

11. Verfahren nach einem der vorangehenden Ansprüche, wobei das Erzeugungsmodell Tagesmuster umfasst, die Wochentags-, Wochenend-, Feiertags- und Saisoneffekte berücksichtigen, wobei das Abwassererzeugungsmodell Abwasserinformationen einschließlich Abwassermengen für einen bestimmten Zeitraum ausgibt.

12. Verfahren nach einem der vorhergehenden Ansprüche, wobei im Falle einer Wettersituation, die sich von einer Strömung bei nassem Wetter zu einer Strömung bei trockenem Wetter ändert, eine Nass-zu-Trocken-Wetterstrategie implementiert wird, wobei, wenn die Wahrscheinlichkeit weiterer Regens als erheblich angesehen wird, CSO-Einheiten Vorrang eingeräumt wird, die noch ein signifikantes Volumen enthalten, und wenn die Wahrscheinlichkeit weiterer Regens als unerheblich angesehen wird, CSO-Einheiten Vorrang eingeräumt wird, deren Kontaminationsindex die höchsten Schadstoffbelastungen widerspiegelt.

13. Verfahren nach einem der vorhergehenden Ansprüche, wobei im Falle einer Wettersituation, die von trockenem Wetter zu nassem Wetter übergeht, ein Trocken-zu-Nass-Wetter implementiert wird, wobei die Schadstoffkonzentration einer Erstspülung als eine Funktion der Netzsystemgeometrie, der Gesamtabflussmenge und des Spitzenflusses geschätzt wird.

14. Kanalisationsnetzsystem mit einer Abwasseraufbereitungsanlage (WWTP) (12), einer Vielzahl von Mischwasserüberlaufeinheiten, CSO-Einheiten (16) mit einem oder mehreren Becken (16.1), einer Vielzahl von Stellgliedern (16.5) zur Beeinflussung des Abwasserflusses durch dieses Kanalisationsnetz und einer Steuereinheit mit einer Datenverarbeitungsvorrichtung, die zur Durchführung des Verfahrens nach einem der Ansprüche 1 bis 13 konfiguriert ist.

15. Computerprogrammprodukt, das Anweisungen umfasst, die, wenn das Programm von einem Computer ausgeführt wird, den Computer veranlassen, die Schritte des in einem der Ansprüche 1 bis 13 beanspruchten Verfahrens durchzuführen.

**Revendications**

1. Procédé mis en oeuvre par ordinateur pour faire fonctionner un système de réseau d'égouts comprenant une station de traitement des eaux usées, WWTP, (12), une pluralité d'unités de trop-plein d'égouts unitaires, CSO, (16) ayant un ou plusieurs bassins (16.1), une pluralité d'actionneurs (16.5) pour influencer l'écoulement des eaux usées à travers ledit réseau d'égouts, dans lequel ledit procédé met en oeuvre une stratégie de commande par temps humide comprenant :

surveiller le niveau et le flux entrant des eaux usées pour au moins un nombre d'unités CSO ;
pour lesdites unités CSO surveillées, estimer un indice de contamination respectif représentant la charge polluante actuelle au niveau de chacune desdites unités CSO surveillées sur la base :

- du flux entrant des eaux usées ;
- des informations de consommation d'eau potable dans une zone cible d'un réseau de distribution d'eau ;
- des informations d'état représentant un état actuel de parties dudit réseau d'égouts correspondant à ladite zone cible du réseau de distribution d'eau, notamment liées et/ou géographiquement adjacentes à ce dernier ; et
- des informations sur les eaux d'égout concernant les eaux d'égout générées par les utilisateurs connectés au système de réseau d'égouts, notamment basées sur un modèle de génération d'eaux d'égout ;

déterminer, au niveau d'une unité de commande de réseau, des points de consigne pour lesdits actionneurs sur la base des indices de contamination associés auxdites unités CSO.

2. Procédé selon la revendication 1, dans lequel un cycle d'étalonnage est réalisé pour chaque unité CSO pendant une situation d'écoulement par temps sec, par lequel une vanne de sortie de l'unité CSO est fermée et le flux entrant est déduite de la mesure du niveau des eaux usées.

3. Procédé selon la revendication 1 ou 2, dans lequel un facteur de dilution de canalisation FC(t) est appris pendant une situation d'écoulement par temps sec, représentant le rapport du débit de consommation d'eau potable sur le débit des eaux usées.

4. Procédé selon la revendication 1, 2 ou 3, dans lequel l'indice de contamination représentant la charge polluante arrivant à un CSO par temps humide est estimé comme une concentration $C_{WastewaterCSO}$ sur la base de la formule :

$$C_{WastewaterCSO}(t, t_{offset})$$
$$= C_{WastewaterHH}(t) \times FT(t_{dwf}) \times \frac{Q_{Wastewater}(dwf, t, toffset)}{Q_{rain(t,toffset)}}$$

où :

$C_{WastewaterHH}(t)$ est la concentration de polluants estimée des eaux usées sortant des ménages ; $Q_{wastewater}(dwf, t, toffset)$ est le débit des eaux usées correspondant à une situation d'écoulement par temps sec à la même période de temps ;
$Q_{rain}$ est le débit de l'eau de pluie ; et
$FT(t_{dwf})$ est un facteur au fil du temps défini comme le rapport eau potable $Q_{water}$ sur $Q_{wastewater}$, appris pendant des conditions météorologiques sèches.

5. Procédé selon la revendication 4, dans lequel ladite stratégie de commande par temps humide est conçue pour minimiser la fonction de coût suivante :

$$m(n) = \sum_{i=1}^{n} \left[ (Ov(n) * C_{WastewaterCSO}) - NL \right]$$

où m est la charge de débordement, Ov est le volume de débordement pour le nième CSO et NL un grand nombre négatif.

6. Procédé selon l'une quelconque des revendications précédentes, dans lequel lesdites informations de consommation sont basées sur des mesures à des emplacements prédéterminés au sein dudit réseau de distribution d'eau ; et/ou dans lequel lesdites informations d'état comprennent des informations de niveau et de flux entrant au niveau du CSO dans la zone cible ; et/ou dans lequel l'estimation dudit indice de contamination comprend la détermination des flux entrants au niveau des unités CSO en prenant en compte une fraction de fuite, une fraction non entrante dans les égouts et une fraction d'infiltration.

**7.** Procédé selon la revendication 6, dans lequel ladite unité de commande de réseau est configurée pour estimer une concentration d'eaux d'égout non diluées, et dans lequel une concentration d'eaux d'égout diluées au niveau du flux entrant des unités CSO est calculée sur la base de ladite concentration d'eaux d'égout non diluées et de ladite fraction de fuite, de la fraction non entrante dans les égouts et de la fraction d'infiltration.

**8.** Procédé selon la revendication 6 ou 7, dans lequel ladite fraction de fuite est estimée sur la base d'une différence entre un débit nul et un débit nocturne minimal ; et de préférence ledit débit nocturne minimal est calculé sur la base de valeurs de consommation d'eau potable dérivées d'un algorithme générant un profil de consommation d'eau potable quotidienne.

**9.** Procédé selon l'une quelconque des revendications 6 à 8, dans lequel l'estimation de ladite fraction de fuite comprend en outre la prise en compte de la population en fonction du réseau de distribution d'eau concerné et/ou des volumes rejetés du réseau de distribution d'eau.

**10.** Procédé selon l'une quelconque des revendications 6 à 9, dans lequel ladite fraction non entrante dans les égouts est estimée au moyen d'un algorithme comparant la demande en eau potable avec le flux entrant des unités CSO lors d'écoulement par temps sec sur des périodes de temps plus longues ; et/ou

dans lequel ladite fraction d'infiltration est estimée au moyen d'algorithmes de reconnaissance de profil ; et/ou dans lequel ladite concentration d'eaux d'égout non diluées est estimée sur la base du modèle de génération d'eaux d'égout pour la population en fonction du système de réseau d'égouts.

**11.** Procédé selon l'une quelconque des revendications précédentes, dans lequel le modèle de génération comprend des profils diurnes permettant des effets de semaine, de week-end, de vacances et de saisons, grâce à quoi le modèle de génération d'eaux d'égout délivre en sortie des informations sur les eaux d'égout incluant les quantités d'eaux d'égout pour une période de temps donnée.

**12.** Procédé selon l'une quelconque des revendications précédentes, dans lequel, en cas de situation météorologique passant d'un écoulement par temps humide à un écoulement par temps sec, une stratégie par temps humide à sec est mise en oeuvre, dans laquelle si un risque de pluie supplémentaire est considéré comme significatif, la priorité est donnée aux unités CSO qui contiennent encore un volume important, et si un risque de pluie supplémentaire est considéré comme insignifiant, la priorité est donnée aux unités CSO pour lesquelles l'indice de contamination reflète les charges polluantes les plus élevées.

**13.** Procédé selon l'une quelconque des revendications précédentes, dans lequel, en cas de situation météorologique passant d'un temps sec à un temps humide, une stratégie par temps sec à humide est mise en oeuvre, dans laquelle la concentration de polluants d'une première chasse est estimée en fonction de la géométrie de système de réseau, du volume total de ruissellement et du débit de pointe.

**14.** Système de réseau d'égouts comprenant une station de traitement des eaux usées, WWTP, (12), une pluralité d'unités de trop-plein d'égouts unitaires, CSO, (16) ayant un ou plusieurs bassins (16.1), une pluralité d'actionneurs (16.5) pour influencer l'écoulement des eaux usées à travers ledit réseau d'égouts, et une unité de commande comprenant un appareil de traitement de données qui est configuré pour mettre en oeuvre le procédé selon l'une quelconque des revendications 1 à 13.

**15.** Produit de programme informatique comprenant des instructions qui, lorsque le programme est exécuté par un ordinateur, amènent l'ordinateur à réaliser les étapes du procédé tel que revendiqué dans l'une quelconque des revendications 1 à 13.

Fig. 1

No rain

Light rain
/////////

heavy rain
//////////////

Hamlet 1

Hamlet 2

Hamlet 3

High load

Medium load

Low load

CSO 1

CSO 2

CSO 3

WWTP

Overflow to river

a) incorrect

No rain

Light rain
/////////

heavy rain
//////////////

Hamlet 1

Hamlet 2

Hamlet 3

High load

Medium load

Low load

CSO 1

CSO 2

CSO 3

WWTP

Overflow to river

b) correct

Fig. 2

EP 4 146 872 B1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3173880 A
- WO 2004038343 A
- US 2006108294 A
- EP 1192107 A1

### Non-patent literature cited in the description

- Water quality permitting: From end-of-pipe to operational strategies. **MENG FANLIN et al.** WATER RESEARCH. ELSEVIER, 27 May 2016, vol. 101, 114-126
- **S. GILLÉ ; D. FIORELLI et al.** Optimal Operation of a Sewer Network Using a Simplified Hydraulic Model. *11th International Conference on Urban Drainage, Edinburgh, Scotland, UK,* 2008
- **DAVID FIORELLI ; GEORGES SCHUTZ.** Sensibilité d'un contrôleur optimal sur un réseau d'assainissement unitaire par rapport à l'exactitude des previsions des debits entrants. NOVATECH, 2010
- **GERNAEY, K.V. ; FLORES-ALSINA, X. ; ROSEN, C. et al.** Dynamic influent pollutant disturbance scenario generation using a phenomenological modelling approach. *Environmental Modelling & Software,* 2011, vol. 26 (11), 1255-1267